(19) Europäisches Patentamt
European Patent Office
Office européen des brevets

(11) **EP 2 428 707 A1**

(12) **DEMANDE DE BREVET EUROPEEN**

(43) Date de publication:
**14.03.2012 Bulletin 2012/11**

(51) Int Cl.:
***F16H 61/04*** *(2006.01)*   ***F16H 61/688*** *(2006.01)*
***B60W 10/10*** *(2012.01)*

(21) Numéro de dépôt: **11305898.6**

(22) Date de dépôt: **11.07.2011**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**

(30) Priorité: **09.09.2010 FR 1057172**

(71) Demandeur: **Renault S.A.S.**
**92100 Boulogne-Billancourt (FR)**

(72) Inventeurs:
• **Borsotto, Bastien**
**83300 DRAGUIGNAN (FR)**
• **Robert, Kevin**
**91220 BRETIGNY (FR)**
• **Planche, Gregory**
**91400 ORSAY (FR)**

(54) **Système et procédé de commande de changements de rapports montants d'une boite de vitesses avec un embrayage de tête et des coupleurs glissants**

(57)     Système de commande de changements de rapports montant d'une boîte de vitesses (1) à rapports étagés comportant un embrayage de tête (3), au moins un arbre primaire (2) relié au moteur d'entraînement (5), au moins un arbre secondaire (6) relié à l'arbre primaire (2) par au moins deux coupleurs du rapport final et initial

(9, 10).

Le système de commande comprend un moyen de régulation (17) d'une valeur de consigne du couple $(C_{f\_cons})$ du coupleur du rapport final (10) en fonction de la valeur mesurée de l'accélération $(\dfrac{d\omega_p}{dt})$ de l'arbre

primaire (2).

## FIG.1

EP 2 428 707 A1

**Description**

L'invention se situe dans le domaine des boîtes de vitesses automatiques à passage de vitesse sans rupture de couple, telles que les boîtes de vitesses automatiques à double embrayage, ou les boîtes de vitesses à coupleurs coniques, utilisées dans les véhicules automobiles.

Plus précisément, l'invention concerne toutes les transmissions où le glissement d'un embrayage doit être transféré vers un autre embrayage pendant les changements de rapport, en particulier sur les boîtes de vitesses robotisées à passage sous couple, munies d'un embrayage de tête et de coupleurs internes, tels que, par exemple, des coupleurs coniques par adhérence, ou des embrayages multidisques.

Dans le cas du double embrayage, un couple moteur est transmis d'un arbre primaire au travers d'un système démultiplicateur vers un premier ou un deuxième arbre secondaire, puis de l'arbre secondaire au travers d'un embrayage vers un train de roue du véhicule. Simultanément, un rapport différent de celui du système démultiplicateur engagé peut être présélectionné sur le deuxième arbre secondaire relié par un deuxième embrayage, à cet instant ouvert, au train de roues du véhicule. Pour passer du rapport engagé au rapport sélectionné, on effectue une « bascule de couple » en ouvrant progressivement l'embrayage du premier arbre secondaire pendant que l'on ferme l'embrayage du deuxième arbre secondaire.

Dans une boîte de vitesses à coupleurs coniques, certains rapports de vitesse sont engagés en permanence entre des pignons fous d'un arbre primaire relié au moteur et des pignons fixes d'un arbre secondaire relié au train de roues du véhicule. Un des coupleurs est donc serré sur le rapport initial tandis que le second coupleur est serré sur le rapport final. Pour le groupe de rapports ainsi équipé de coupleurs, le changement de rapports se fait en effectuant une « bascule de couple », en ouvrant progressivement le coupleur du rapport initial et en fermant simultanément, de manière progressive, le coupleur du rapport final vers lequel on souhaite basculer. Les deux coupleurs sont donc mis en glissement en parallèle, ainsi le couple transmis aux roues pendant la durée du changement de rapport correspond à la somme des couples fournis par les deux coupleurs concernés, et reste constante, de sorte que la liaison entre le moteur et les roues du véhicule est maintenue et qu'aucun à-coup n'est ressenti par les passagers du véhicule.

Une fois le transfert effectué, le coupleur du rapport final, appelé par la suite coupleur final, est laissé en glissement, puis le couple moteur est estompé, c'est-à-dire, fortement diminué, de façon à amener progressivement la vitesse de rotation du moteur sur sa cible de fin de changement de rapport. Le coupleur final glisse donc durant toute la phase de synchronisation de la vitesse de rotation du moteur sur la vitesse de rotation de l'arbre primaire.

Lors d'un changement de rapport de vitesses, on distingue une phase de transfert de couple entre deux coupleurs et une phase de synchronisation des vitesses de rotation de l'arbre de sortie du moteur et de l'arbre primaire avec la vitesse de rotation de l'arbre secondaire. Les vitesses de rotation du moteur, de l'arbre primaire et de l'arbre secondaire, seront appelées par la suite respectivement, régime moteur, régime primaire et régime secondaire.

L'utilisation de tels coupleurs dans une boîte de vitesses automatiques a pour inconvénient de générer une oscillation de couple dans un coupleur lors d'un changement de rapport sous couple, en particulier lors des passages de première en deuxième et de deuxième en troisième. Cette oscillation n'est généralement pas amortie et se propage jusqu'aux roues, dégradant ainsi fortement le confort du conducteur. Cette oscillation disparaît dès que les régimes de rotation du moteur et de l'arbre primaire sont synchronisés avec le régime de rotation de l'arbre secondaire et que le coupleur final est verrouillé. Or l'architecture des boîtes de vitesses à coupleurs, très contrainte par l'encombrement réduit autorisé dans le véhicule, ne permet pas d'intégrer une fonction d'amortissement des oscillations perçues dans le coupleur.

De plus, la capacité de dissipation d'énergie des coupleurs est assez faible, de sorte que leur glissement prolongé pendant toute la phase de synchronisation du régime moteur peut endommager les matériaux constitutifs du coupleur, selon les couples mis en jeu.

Il existe des procédés de commande de changements de rapports montants permettant de réduire la phase de glissement d'un coupleur présent dans une boîte de vitesses automatisée, pendant une opération de changement de rapport montant sous couple. A cet effet, le glissement du coupleur final est transféré vers l'embrayage de tête de la boîte de vitesses. L'embrayage de tête ne crée pas d'oscillations en glissant, et a une capacité énergétique beaucoup plus importante que les coupleurs internes. Le coupleur final est donc complètement verrouillé en position fermée pendant la phase de synchronisation du régime moteur avec le régime primaire et l'embrayage de tête est déverrouillé de manière à assurer le glissement nécessaire à cette synchronisation. Le glissement de l'embrayage de tête permet de réaliser par la suite l'estompage de couple du moteur. La phase de synchronisation de l'arbre primaire sur l'arbre secondaire doit être réalisée avant la phase de transfert du glissement du coupleur final vers l'embrayage. Pour réaliser cette synchronisation, il suffit de faire chuter 1e régime primaire vers sa cible de changement de rapport en diminuant le couple d'embrayage dès que la bascule de couple est terminée.

Toutefois, un tel procédé de commande est sensible à la qualité de la réalisation des consignes de couple par les actionneurs. Notamment, le temps de réponse de l'actionneur d'embrayage fait que, alors que la consigne de couple d'embrayage est générée afin d'avoir un écart de couple minimal entre l'embrayage et le coupleur en fin de synchronisation du régime primaire, le couple d'embrayage réel reste minimal, de sorte que l'écart de couple est maximal et crée un choc en fin de synchronisation du régime primaire. Pour palier à ce problème, il existe la possibilité d'anticiper la demande d'estompage du couple d'embrayage. Toutefois, dans le cas où l'estompage est réalisé trop tôt, la synchronisation du régime primaire ne sera pas réalisable. De plus, une telle solution reste sensible à la résolution et à la précision des couples d'embrayage et du coupleur final réels. En effet, du fait de la faible inertie de l'arbre primaire, la moindre variation de l'écart de couple entre l'embrayage et le coupleur final influe sur la synchronisation du régime primaire.

Le but de l'invention est donc de pallier aux inconvénients liés à l'utilisation d'une telle synchronisation du régime primaire en proposant un système et un procédé de commande permettant de commander la consigne du couple du coupleur final afin de compenser l'effet des perturbations dégradant la réalisation des consignes de couple et ainsi de garantir des performances de robustesse satisfaisantes.

L'invention a pour objet un système de commande de changements de rapports montant d'une boîte de vitesses à rapports étagés comportant un embrayage de tête, au moins un arbre primaire relié au moteur d'entraînement, au moins un arbre secondaire relié à l'arbre primaire par au moins deux coupleurs du rapport final et initial. Les deux coupleurs du rapport final et initial étant aptes à transférer progressivement le couple du coupleur du rapport initial vers le coupleur du rapport final, lors d'un changement de rapport.

Le système de commande comprend un moyen de régulation d'une valeur de consigne du couple du coupleur du rapport final en fonction de la valeur mesurée de l'accélération de l'arbre primaire.

Ainsi, en régulant la valeur de consigne du couple du coupleur final, on synchronise le régime de l'arbre primaire sans créer de choc.

Avantageusement, le moyen de régulation comprend un moyen de génération d'une valeur de consigne du couple d'embrayage et d'une valeur de consigne du couple du coupleur final en boucle ouverte, et un module de commande permettant de réguler la valeur du couple du coupleur final en fonction de l'accélération de l'arbre primaire.

Le système de commande peut comprendre un module de récupération des données permettant de calculer une valeur de consigne du couple du coupleur final en boucle fermée, ladite valeur de consigne du couple du coupleur final en boucle fermée étant injectée dans le module de commande.

Par exemple, le système de commande comprend un moyen de comparaison de la valeur de l'accélération de l'arbre primaire avec une valeur seuil.

Ainsi, lorsque la valeur de l'accélération de l'arbre primaire est inférieure à la valeur seuil, la valeur de consigne du couple du coupleur final correspond à la somme des valeurs de consignes de couple du coupleur en boucle ouverte et en boucle fermée.

Selon un second aspect, l'invention concerne un procédé de commande de changements de rapports montant d'une boîte de vitesses à rapports étagés comportant un embrayage de tête, au moins un arbre primaire relié au moteur d'entraînement, au moins un arbre secondaire relié à l'arbre primaire par au moins deux coupleurs du rapport final et initial, aptes à transférer progressivement le couple du coupleur du rapport initial vers le coupleur du rapport final, lors d'un changement de rapport.

On régule la consigne du couple du coupleur du rapport final en fonction de la valeur mesurée de l'accélération de l'arbre primaire.

Avantageusement, la consigne du couple du coupleur du rapport final est régulée en fonction des valeurs réelles du couple de l'embrayage et du couple du coupleur du rapport final.

Ainsi, lorsque la mesure de l'accélération de l'arbre primaire est positive, la consigne du coupleur du rapport final correspond à une consigne du coupleur du rapport final en boucle ouverte, et lorsque la valeur mesurée de l'accélération est négative, la consigne du coupleur du rapport final correspond à la somme de la consigne du coupleur du rapport final en boucle ouverte et d'une consigne du coupleur du rapport final en boucle fermée.

Par exemple, la consigne du coupleur du rapport final en boucle ouverte est fonction d'un couple demandé par le conducteur, diminué des pertes inertielles et d'une pente calibrable et la consigne du coupleur du rapport final en boucle fermée est fonction des valeurs réelles du couple de l'embrayage et du couple du coupleur du rapport final et de l'accélération de l'arbre primaire.

En outre, le verrouillage du coupleur du rapport final est réalisé lors du lancement de la phase de synchronisation du régime de l'arbre moteur, et le déverrouillage de l'embrayage est réalisé lors du déverrouillage du coupleur du rapport initial.

D'autres buts, caractéristiques et avantages de l'invention apparaîtront à la lecture de la description suivante, donnée uniquement à titre d'exemple non limitatif, et faite en référence aux dessins annexés sur lesquels :

- la figure 1 illustre un schéma de principe d'une boîte de vitesse comprenant un système de commande selon l'invention ;
- la figure 2 représente un système de commande selon l'invention ;
- la figure 3 illustre en détail le module de génération d'une consigne de couple d'embrayage selon la figure 2 ;

- la figure 4 illustre en détail le module de génération d'une consigne de couple du coupleur final selon la figure 2.

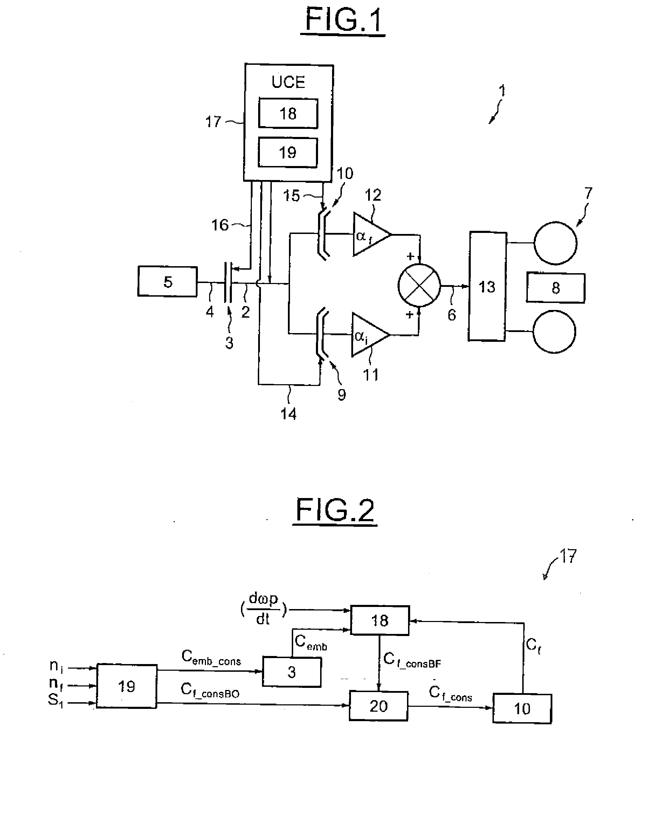

Tel qu'illustré à la figure 1, une boîte de vitesses 1 comprend au moins un arbre primaire 2 couplé en rotation au travers d'un embrayage de tête 3 à un arbre de sortie 4 d'un moteur 5, par exemple un moteur à combustion interne. La boîte de vitesses 1 comprend également un arbre secondaire 6 relié en rotation à au moins un train de roues 7 d'un véhicule automobile 8. L'arbre secondaire 6 est relié à l'arbre primaire 2 par l'intermédiaire d'au moins deux dispositifs de couplage 9 et 10 associés, chacun, à un moyen de réduction 11, 12 des couples.

Les dispositifs de couplage 9, 10 peuvent être, à titre d'exemple non limitatif, des coupleurs coniques à rampes inclinées, aptes à synchroniser des pignons de vitesses sur leur arbre et de maintenir un rapport engagé par adhérence, ou des embrayages à disques.

Le moyen de réduction de couples 11, 12 peut être une descente d'engrenage ayant des rapports de réduction, respectivement $\alpha_i$, $\alpha_f$. Les coupleurs 9, 10 permettent de faire passer le couple par l'une ou l'autre des descentes d'engrenage 11, 12 et de transférer progressivement le couple sur l'une ou l'autre 11, 12 lors d'un changement de rapport. Au cours d'un changement de rapport, le couple bascule entre les deux coupleurs 9, 10.

La boîte de vitesses 1 comprend également entre l'arbre secondaire 6 et le train de roues 7, un différentiel 13 permettant de répartir le couple de l'arbre secondaire 6 sur deux arbres de roues 7.

Le coupleur 9 est par exemple un coupleur du rapport initial, relâché lors du changement de rapport. Dans ce cas, le coupleur 10 est un coupleur du rapport final, serré lors du changement de rapport.

Les valeurs des couples du coupleur 9, 10 et de l'embrayage 3 sont estimés à partir des efforts mesurés par des actionneurs 14, 15 reliés à chacun des coupleurs 9, 10 et par un actionneur 16 situé au niveau de l'embrayage 3. Ces valeurs sont ensuite acquises à l'aide d'un calculateur 17, ou unité de contrôle électronique UCE. Le calculateur 17 permet également de recueillir la mesure de la valeur de l'accélération de l'arbre primaire à l'aide d'un capteur (non représenté).

L'unité de contrôle 17, détaillée à la figure 2, comprend un module de récupération des données 18 et un module de génération de consignes 19 de couples. Le module de génération de consignes 19 permet de générer une consigne de couple $C_{f-consBO}$ du coupleur final 10 en boucle ouverte et une consigne du couple $C_{emb-cons}$ d'embrayage 3, comprenant en entrée les valeurs de cibles de régime de début et de fin de passage $n_i$ et $n_f$ et la valeur du couple transmis à l'embrayage $S_1$ après son déverrouillage, c'est-à-dire le couple demandé par le conducteur, diminué des pertes inertielles. L'unité de contrôle 17 comprend un deuxième module de génération de consignes 20 permettant d'adapter la consigne de couple $C_{f-cons}$ du coupleur final 10 en fonction des valeurs estimées ou mesurées de couples du coupleur final $C_f$ et de l'embrayage $C_{emb}$ et de l'accélération de l'arbre primaire $\dfrac{d\omega p}{dt}$, récupérées dans le module de récupération des données 18, c'est-à-dire en fonction de la valeur de consigne calculée en boucle fermée $C_{f\_consBF}$.

En phase 1, le coupleur initial 9 est déverrouillé pour préparer la réalisation de la bascule de couple : le couple du coupleur initial Ci descend à la valeur $S_1$.

En phase 2, le couple bascule entre les coupleurs 9, 10, à couple total constant égal à $S_1$. Le couple du coupleur initial décroît et le couple du coupleur final croit jusqu'au début de synchronisation de l'arbre primaire.

Avant la synchronisation du moteur, l'arbre primaire 2 qui est solidaire du moteur 5, doit devenir solidaire des roues 7, en passant par une phase où il est solidaire d'aucun des deux.

En phase 3, le régime primaire à rejoint sa cible sur le rapport final. Le coupleur du rapport final 10 est verrouillé en position fermée et l'embrayage de tête 3 est déverrouillé de manière à assurer le glissement nécessaire à la synchronisation du moteur 5 avec l'arbre primaire 2 sur le rapport final.

La phase de synchronisation du moteur est lancée une fois que la phase de synchronisation du primaire est terminée. Le verrouillage du coupleur final 10 est réalisée lors du lancement de la phase de synchronisation du moteur, alors que le verrouillage de l'embrayage de tête 3 est réalisé en même temps que celui du coupleur initial 9.

En phase 4, le couple d'embrayage $C_{emb}$ est estompé de manière à permettre au régime moteur de rejoindre sa cible sur le rapport final.

Pendant le changement de rapport, le bilan des couples au niveau de l'embrayage 3 permet d'obtenir l'équation suivante :

$$J_p \frac{d\omega_p}{dt} = C_{emb} - C_f \qquad (1)$$

Avec :

Jp l'inertie de l'arbre primaire, qui est une constante mécanique (par exemple en kg.m$^2$) ;

$\dfrac{d\omega_p}{dt}$ , l'accélération de l'arbre primaire ;

$C_{emb}$, le couple d'embrayage, et
$C_f$, le couple du coupleur final.

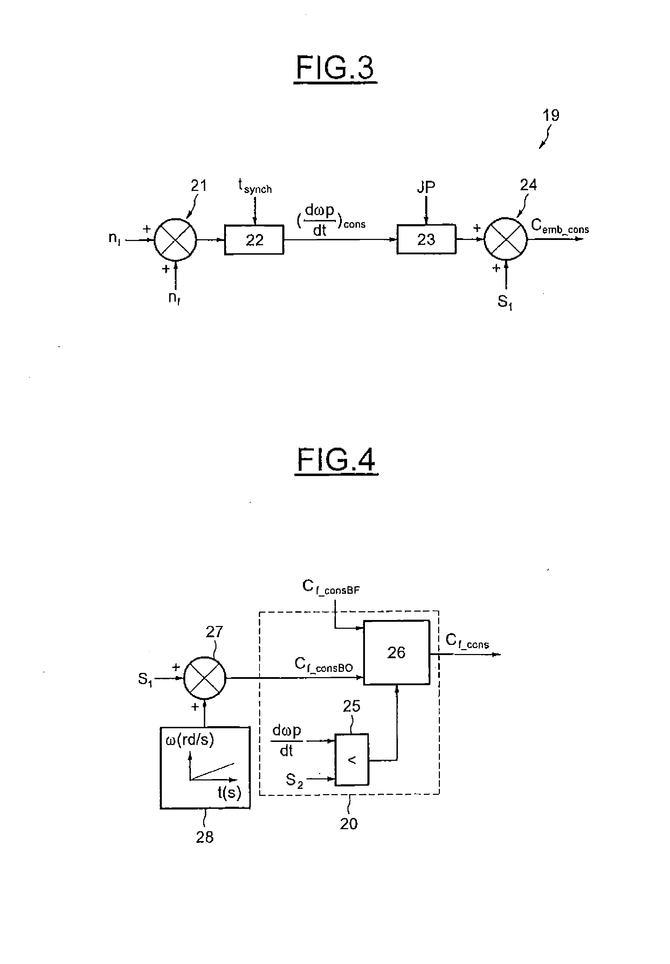

La figure 3 illustre en détail la détermination de la consigne du couple $Cemb\_cons$ d'embrayage 3. Le module de détermination de consignes 19 du couple $C_{emb\_cons}$ comprend un comparateur 21, un moyen de calcul 22 de la valeur consigne de l'accélération de l'arbre primaire $\dfrac{d\omega_p}{dt}$ , un multiplicateur 23 et un sommateur 24.

On obtient ainsi les équations suivantes :

$$\left(\frac{d\omega_p}{dt}\right)_{cons} = \frac{n_i - n_f}{t_{ynch}} \qquad \cdot \ (2) \ ;$$

Et :

$$C_{emb\_cons} = \left(\frac{d\omega_p}{dt}\right)_{cons} \bullet J_P + S_1 \quad (3)$$

Avec :

Jp l'inertie de l'arbre primaire, qui est une constante mécanique (par exemple en kg.m$^2$);

$\left(\dfrac{d\omega_p}{dt}\right)_{cons}$ , cons, la consigne de l'accélération de l'arbre primaire ;

$t_{synch}$, la durée souhaitée de la phase de synchronisation du régime primaire ;
$n_i$, la cible du régime de début de passage ;
$n_f$, la cible du régime de fin de passage ;
$C_{emb\_cons}$, la consigne du couple d'embrayage, et
$S_1$, la valeur du couple transmis à l'embrayage après son déverrouillage.

La figure 4 illustre en détail la commande de la consigne de couple $C_{f\_cons}$ du coupleur final 10 issue du deuxième module de génération de consignes 20.
Afin de compenser l'effet des perturbations pouvant dégrader la réalisation des consignes de couple, notamment à cause de la précision des actionneurs, de la température ambiante et de la dégradation des matériaux, la consigne de couple $C_{f\_cons}$ du coupleur final 10 est déterminée en fonction de la valeur mesurée de l'accélération de l'arbre primaire $\dfrac{d\omega_p}{dt}$ . Pour cela, la valeur de l'accélération de l'arbre primaire $\dfrac{d\omega_p}{dt}$ est comparée dans un comparateur 25 à une valeur seuil $S_2$, par exemple à la valeur zéro. La valeur issue du comparateur 25 est envoyée à un module de commande 26 permettant de déterminer la consigne de couple $C_{f\_cons}$ du coupleur final 10.
En effet, il est important d'ajuster la valeur de consigne du coupleur final $C_{f\_cons}$ en fonction de valeurs mesurée et ainsi d'obtenir une valeur mesurée du couple du coupleur final $C_f$ au plus proche d'une valeur cible.

Lorsque la valeur de l'accélération de l'arbre primaire $\dfrac{d\omega_p}{dt}$ est supérieure à zéro, c'est-à-dire lorsque l'on n'est pas en train de synchroniser l'arbre primaire 2, la valeur de consigne de couple $C_{f-cons}$ du coupleur final 10 correspond à la valeur de consigne calculée en boucle ouverte $C_{f\_consBO}$ : la stratégie de régulation n'étant pas activée ici.

Lorsque la valeur de l'accélération de l'arbre primaire $\dfrac{d\omega_p}{dt}$ est inférieure à zéro, c'est-à-dire dans le cas de synchronisation de l'arbre primaire 2, la valeur de consigne de couple $C_{f-cons}$ du coupleur final 10 correspond à la somme de la valeur de consigne calculée en boucle ouverte $C_{f\_consBO}$ avec la valeur de consigne calculée en boucle fermée $C_{f\_consBF}$.

La valeur de consigne calculée en boucle ouverte $C_{f-consBO}$ correspond à la somme dans le somateur 27 de la valeur du couple transmis à l'embrayage après son déverrouillage $S_1$ et d'un moyen de génération d'une consigne en rampe 28.

On obtient ainsi l'équation suivante :

$$C_{f\_consBO} = S_1 + a\left(t - t_{f\_b}\right) \qquad (4)$$

Avec :

$C_{f-consBO}$, la valeur de consigne calculée en boucle ouverte ;
a, la pente calibrable
$t_{f\_b}$, l'instant où la fin de la phase de bascule de couple est détectée.

La valeur de consigne calculée en boucle fermée $C_{f-consBF}$ compare l'écart des couples réalisés avec la pente de diminution du régime primaire. On obtient ainsi l'équation suivante :

$$C_{f\_consBF} = \left(C_{emb} - C_f\right) - Jp\,\dfrac{d\omega_p}{dt} \qquad (5)$$

Avec :

$C_{f-consBF}$, la valeur de consigne calculée en boucle fermée ;
$C_{emb}$, la valeur mesurée du couple d'embrayage 3;
$C_f$, la valeur mesurée du couple du coupleur 10 ;

$\dfrac{d\omega_p}{dt}$, la valeur mesurée de l'accélération de l'arbre primaire.

Si la valeur de mesure de l'accélération de l'arbre primaire $\dfrac{d\omega_p}{dt}$ n'est pas disponible, il est possible de l'estimer à partir d'une dérivation numérique.

Ainsi, si la chute du régime primaire n'est pas en adéquation avec l'écart de couple réalisé, la consigne de couple en boucle fermée permet de corriger la consigne de couple globale du coupleur final et ainsi de compenser l'effet des perturbations extérieures. La contribution de la consigne de couple en boucle fermée ne doit avoir d'influence que lorsque le régime primaire diminue (pendant la synchronisation de l'arbre primaire 2), c'est-à-dire lorsque son accélération change de signe.

Grâce à l'invention qui vient d'être décrite, on peut améliorer la synchronisation du régime primaire par réalisation d'un estompage de couple sur l'embrayage, en évitant un choc lors de la synchronisation grâce à une régulation en boucle fermée de la consigne de couple du coupleur final.

Cette invention trouve une application privilégiée mais non limitative, sur les véhicules automobiles équipés d'une boîte de vitesses robotisée à passage sous couple comportant au moins deux coupleur, et peut être appliquée à toutes les boîtes de vitesses comportant un dispositif de couplage mécanique commandé, ainsi que sur les groupes motopropulseurs hybrides, par exemple lors des transitions d'un mode de fonctionnement thermique à un mode de fonctionnement électrique.

**Revendications**

1.  Système de commande de changements de rapports montant d'une boîte de vitesses (1) à rapports étagés comportant un embrayage de tête (3), au moins un arbre primaire (2) relié au moteur d'entraînement (5), au moins un arbre secondaire (6) relié à l'arbre primaire (2) par au moins deux coupleurs du rapport final et initial (9, 10), **caractérisé en ce qu'**il comprend un moyen de régulation (17) d'une valeur de consigne du couple ($C_{f\_cons}$) du coupleur du rapport final (10) en fonction de la valeur mesurée de l'accélération $\left(\dfrac{d\omega_p}{dt}\right)$ de l'arbre primaire (2).

2.  Système de commande selon la revendication 1, dans lequel le moyen de régulation (17) comprend un moyen de génération (19) d'une valeur de consigne du couple d'embrayage ($C_{f\_emb}$) et d'une valeur de consigne du couple ($C_{f\_consBO}$) du coupleur final (10) en boucle ouverte, et un module de commande (26) permettant de réguler la valeur du couple ($C_{f\_cons}$) du coupleur final (10) en fonction de l'accélération $\left(\dfrac{d\omega_p}{dt}\right)$ de l'arbre primaire (2).

3.  Système de commande selon la revendication 2, comprenant un module de récupération des données (18) permettant de calculer une-valeur de consigne du couple ($C_{f\_consBF}$) du coupleur final (10) en boucle fermée, ladite valeur de consigne du couple ($C_{f\_consBF}$) du coupleur final (10) en boucle fermée étant injectée dans le module de commande (26).

4.  Système de commande selon la revendication 3, comprenant un moyen de comparaison (25) de la valeur de l'accélération $\left(\dfrac{d\omega_p}{dt}\right)$ de l'arbre primaire (2) avec une valeur seuil ($S_2$).

5.  Système de commande selon la revendication 4, dans lequel, lorsque la valeur de l'accélération $\left(\dfrac{d\omega_p}{dt}\right)$ de l'arbre primaire (2) est inférieure à la valeur seuil ($S_2$), la valeur de consigne ($C_{f\_cons}$) du couple du coupleur final (10) correspond à la somme des valeurs de consignes en boucle ouverte ($C_{f\_consBO}$) et en boucle fermée ($C_{f\_consBF}$).

6.  Procédé de commande de changements de rapports montant d'une boîte de vitesses (1) à rapports étagés comportant un embrayage de tête (3), au moins un arbre primaire (2) relié au moteur d'entraînement (5), au moins un arbre secondaire (6) relié à l'arbre primaire (2) par au moins deux coupleurs du rapport final et initial (9, 10), **caractérisé en ce que** l'on régule la consigne du couple ($C_{f\_cons}$) du coupleur du rapport final (10) en fonction de la valeur mesurée de l'accélération $\left(\dfrac{d\omega_p}{dt}\right)$ de l'arbre primaire (2).

7.  Procédé de commande selon la revendication 6, dans lequel la consigne du couple ($C_{f\_cons}$) du coupleur du rapport final (10) est régulée en fonction des valeurs réelles du couple ($C_{emb}$) de l'embrayage (3) et du couple ($C_f$) du coupleur du rapport final (10).

8.  Procédé de commande selon la revendication 6 ou 7, dans lequel, lorsque la mesure de l'accélération $\left(\dfrac{d\omega_p}{dt}\right)$ de l'arbre primaire (2) est positive, la consigne ($C_{f\_cons}$) du coupleur du rapport final (10) correspond à une consigne du coupleur du rapport final en boucle ouverte ($C_{f\_consBO}$), et lorsque la valeur mesurée de l'accélération $\left(\dfrac{d\omega_p}{dt}\right)$ est négative, la consigne du coupleur du rapport final ($C_{f\_cons}$) correspond à la somme de la consigne du coupleur du rapport final en boucle ouverte ($C_{f\_consBO}$) et d'une consigne du coupleur du rapport final en boucle fermée ($C_{f\_consBF}$).

9.  Procédé de commande selon la revendication 8, dans lequel la consigne du coupleur du rapport final en boucle ouverte ($C_{f\_consBO}$) est fonction d'un couple demandé par le conducteur ($S_1$), diminué des pertes inertielles et d'une pente calibrable ($a$).

**10.** Procédé de commande selon la revendication 8, dans lequel la consigne du coupleur du rapport final en boucle fermée *(C$_{f\_consBF}$)* est fonction des valeurs réelles du couple de l'embrayage *(C$_{emb}$)* et du couple du coupleur du rapport final (*Cf*) et de l'accélération de l'arbre primaire ($\dfrac{d\omega_P}{dt}$).

**11.** Procédé de commande selon l'une quelconque des revendications 6 à 10, dans lequel le verrouillage du coupleur du rapport final (10) est réalisé lors du lancement de la phase de synchronisation du régime de l'arbre moteur (4), et le déverrouillage de l'embrayage (3) est réalisé lors du déverrouillage du coupleur du rapport initial (9).

## FIG.1

## FIG.2

## FIG.3

19

## FIG.4

Europäisches
Patentamt

European
Patent Office

Office européen
des brevets

**RAPPORT DE RECHERCHE EUROPEENNE**

Numéro de la demande

EP 11 30 5898

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | JP 2003 161346 A (FUJI HEAVY IND LTD) 6 juin 2003 (2003-06-06) * abrégé * * alinéa [0018] - alinéa [0020] * * alinéa [0022] - alinéa [0027] * ----- | 1-4,6 | INV. F16H61/04 F16H61/688 B60W10/10 |
| X | EP 1 150 045 A2 (FUJI HEAVY IND LTD [JP]) 31 octobre 2001 (2001-10-31) * figures 3,4,5-7,9,12,14 * ----- | 1-4,6 | |
| X | EP 1 164 310 A1 (HITACHI LTD [JP]) 19 décembre 2001 (2001-12-19) * figures 1,2,5,7,8,10,14 * ----- | 1-4,6 | |
| A | US 2001/011484 A1 (RUHLE GUNTER [DE] ET AL RUEHLE GUENTER [DE] ET AL) 9 août 2001 (2001-08-09) * figures 1, 3, 7 * * alinéa [0016] * * alinéa [0021] * * alinéa [0029] * * alinéa [0068] - alinéa [0073] * * alinéa [0089] - alinéa [0094] * ----- | 1-11 | DOMAINES TECHNIQUES RECHERCHES (IPC) F16H B60W |

Le présent rapport a été établi pour toutes les revendications

| Lieu de la recherche | Date d'achèvement de la recherche | Examinateur |
|---|---|---|
| La Haye | 21 novembre 2011 | Jordan, David |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 11 30 5898

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

21-11-2011

| Document brevet cité au rapport de recherche | | Date de publication | Membre(s) de la famille de brevet(s) | | Date de publication |
|---|---|---|---|---|---|
| JP 2003161346 | A | 06-06-2003 | AUCUN | | |
| EP 1150045 | A2 | 31-10-2001 | EP | 1150045 A2 | 31-10-2001 |
| | | | JP | 2001311466 A | 09-11-2001 |
| | | | US | 2002010052 A1 | 24-01-2002 |
| EP 1164310 | A1 | 19-12-2001 | EP | 1164310 A1 | 19-12-2001 |
| | | | JP | 3823728 B2 | 20-09-2006 |
| | | | US | 6679133 B1 | 20-01-2004 |
| | | | US | 2004116249 A1 | 17-06-2004 |
| | | | WO | 0032960 A1 | 08-06-2000 |
| US 2001011484 | A1 | 09-08-2001 | JP | 2001213201 A | 07-08-2001 |
| | | | KR | 20010062482 A | 07-07-2001 |
| | | | US | 2001011484 A1 | 09-08-2001 |

EPO FORM P0460

Pour tout renseignement concernant cette annexe : voir Journal Officiel de l'Office européen des brevets, No.12/82